Europäisches Patentamt

European Patent Office

Office européen des brevets

(19)

(11) **EP 1 725 020 A1**

(12) **EUROPEAN PATENT APPLICATION**
published in accordance with Art. 158(3) EPC

(43) Date of publication:
**22.11.2006 Bulletin 2006/47**

(51) Int Cl.:
***H04N 5/225*** (2006.01)

(21) Application number: **05719900.2**

(22) Date of filing: **03.03.2005**

(86) International application number:
**PCT/JP2005/003596**

(87) International publication number:
**WO 2005/088960 (22.09.2005 Gazette 2005/38)**

(84) Designated Contracting States:
**AT BE BG CH CY CZ DE DK EE ES FI FR GB GR HU IE IS IT LI LT LU MC NL PL PT RO SE SI SK TR**

(30) Priority: **10.03.2004 JP 2004067679**
**08.10.2004 JP 2004296528**

(71) Applicant: **SEIKO EPSON CORPORATION**
**Shinjuku-ku,**
**Tokyo 163-0811 (JP)**

(72) Inventor: **SHIOHARA, Ryuichi**
**c/o Seiko Epson Corporation**
**Suwa-shi, Nagano 3928502 (JP)**

(74) Representative: **Cloughley, Peter Andrew et al**
**Miller Sturt Kenyon,**
**9 John Street**
**London WC1N 2ES (GB)**

(54) **DIGITAL CAMERA, FILE OUTPUT METHOD, FILE OUTPUT PROGRAM, IMAGE DATA STRUCTURE, AND IMAGE QUALITY DISPLAY DEVICE**

(57) A digital camera, a file output method, a file output program, and an image data structure for shortening the time required for displaying the frequency distribution of gray scale levels of a subject image are provided.

A digital camera **characterized by** image capturing means for converting a subject image into image data; storage means for storing the subject image as the image data output from the image capturing means; count means for counting the frequency of gray scale levels of the subject image stored in the storage means for each predetermined section; and output means for storing the subject image stored in the storage means and the frequency for each predetermined section counted by the count means in one file and outputting the file.

FIG. 1

CREATION DATE

IMAGE SIZE

POINTER TO IMAGE DATA AREA

POINTER TO GRAPH DATA AREA

55 HEADER AREA

IMAGE DATA

56 IMAGE DATA AREA

100、202、421、29、382、83、‥‥‥‥

57 GRAPH DATA AREA

EP 1 725 020 A1

**Description**

Technical Field

This invention relates to a digital camera, a file output method, a file output program, an image data structure, and an image quality display.

Background Art

Hitherto, a digital camera for displaying the frequency distribution of gray scale levels of an image such as brightness values and pixel values of RGB channels on a graph such as a histogram has been known (for example, refer to patent document 1).
When a subject image to be graphed is selected, an electronic still camera (digital camera) described in patent document 1 counts the frequency of gray scale levels for each of sections set at equal intervals on a linear scale and displays the frequency distribution of gray scale levels by arranging bars each representing the frequency in each section by height at equal intervals in a lateral direction. Such a graph enables the user to check whether or not the exposure condition when recording a subject image with the digital camera is appropriate, for example.
However, the digital camera described in patent document 1 counts the frequency after a subject image is selected and therefore it takes a time until a graph is displayed from selection of the subject image; this is a problem.
By the way, it is said that the whole senses of a human being comply with Weber's law and it is said that the sense concerning the brightness having a correlation with the gray scale level of an image also complies with Weber's law. According to Weber-Fechner's law as a development of Weber's law, the relationship between the sense magnitude and the physical stimulus quantity is represented by the following expression:

$$S = k \times \log I + c$$

Here, S is the sense magnitude, I is the physical stimulus quantity, and k and c are constants. From the expression, it is seen that the sense of a human being concerning the brightness can be approximated by a logarithmic function.
The exposure value (EV) representing an exposure condition is defined according to the following expression:

$$2^{EV} = F^2/t$$

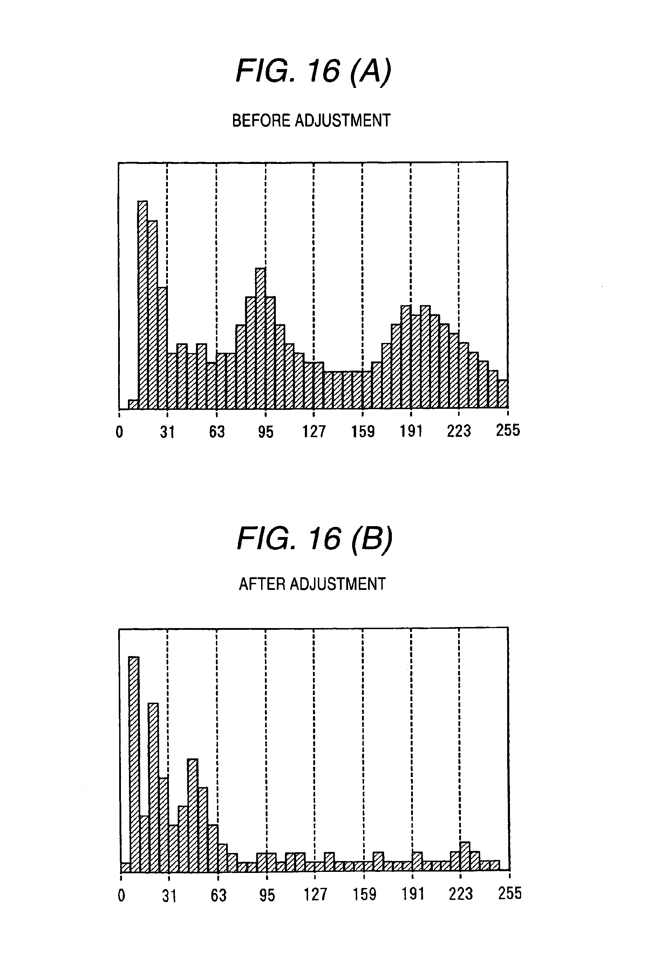

Here, F is the F-stop number representing the aperture of a camera and t is the exposure time (units: Seconds). As shown in the expression, it is seen that the exposure value is shown by a logarithmic function. Generally, a large number of subjects concentrate in the range in which the exposure difference is 5 EV and it is said that appropriate gradation representation of a subject is made possible by adjusting the exposure condition so that the brightness values are distributed in the range corresponding to $\pm 2.5$ EV centering on the brightness value corresponding to 18% reflected light. The exposure value is represented by a logarithmic function as described above and a general camera is designed so that each of the lens aperture and the exposure time determining the exposure value can be changed in 1-EV units, 1/2-EV units, or 1/3-EV units.
Thus, if the brightness values of an image are displayed on a histogram with the section axis on a linear scale, it is difficult for the user to adjust the exposure condition by intuition based on the histogram; this is a problem. That is, the exposure condition can be recognized from the histogram of the brightness values with the section axis on the linear scale, but such a histogram is hard to use as an index used for exposure correction. More specifically, if the histogram of the brightness values with the section axis on the linear scale is displayed, it is difficult for the user to know how the distribution of the brightness values of the image representing the subject corresponds to the range in which the exposure difference is 5 EV and thus it is also difficult for the user to determine whether or not an image is picked up on appropriate exposure and further it is also extremely difficult for the user to determine whether to make 1/3 EV plus correction or 2/3 EV minus correction to obtain appropriate exposure. For example, the histogram with the section axis on the linear scale changes in shape before and after the exposure condition is adjusted in EV units as shown in FIGS. 16 (A) and 16 (B) and thus it is difficult for the user to predict the shape after adjustment before adjustment of the exposure condition. (FIGS. 16(A) and 16(B) are histograms provided when an image of the same subject is picked up with the exposure condition adjusted in EV units in the same image capturing environment.) Therefore, it is difficult for the user to determine whether or not the brightness values are distributed appropriately in the range corresponding to the exposure difference 5 EV by seeing the histograms of FIGS. 16(A) and 16(B) and know how much the exposure value is to be adjusted in EV units to obtain an optimum brightness value distribution by intuition. Therefore, it is desirable that a graph representing the frequency distribution of gray scale levels should be displayed so that the exposure value can be adjusted by intuition.

Patent document 1: JP-A-2001-268400

Disclosure of the Invention

Problems to be Solved by the Invention

The invention is created in consideration of the problems and it is a first object of the invention to provide a digital camera, a file output method, a file output program, and an image data structure for shortening the time required for displaying the frequency distribution of gray scale levels of a subject image.
It is a second object of the invention to provide an image quality display for displaying the frequency distribution of gray scale levels of a subject image in a short time.

Means For Solving the Problems

To accomplish the first object described above, a digital camera includes image capturing means for converting a subject image into image data; storagemeans for storing the subject image as the image data output from the image capturingmeans; countmeans for counting frequency of gray scale levels of the subject image stored in the storage means for each predetermined section; and output means for storing the subject image stored in the storage means and the frequency for each predetermined section counted by the countmeans in one file and outputting the file. If the subject image and the frequency of gray scale levels of the subject image counted for each predetermined section are stored in one file, when a graph representing the frequency distribution of gray scale levels of the subject image is displayed, the frequency for each section is read from the file, whereby the time required until the graph is displayed can be shortened. Thus, the digital camera makes it possible to shorten the time required for displaying the frequency distribution of gray scale levels of the subject image.

To accomplish the first object described above, the count means of the digital camera counts the frequency for each of sections set at equal intervals on a logarithmic scale. The digital camera can display a graph representing the frequency for each of the sections set at equal intervals on the logarithmic scale. If a graph representing the frequency for each of the sections set at equal intervals on the logarithmic scale is displayed, the user can adjust the exposure condition through intuition. Thus, the digital camera makes it possible to shorten the time required for displaying the frequency distribution for enabling the user to adjust the exposure condition through intuition.

To accomplish the first object described above, the count means of the digital camera counts the frequency for each of sections set at equal intervals on a linear scale. The digital camera makes it possible to display a graph representing the frequency for each of the sections set at equal intervals on the logarithmic scale and to display a graph representing the frequency for each of the sections set at equal intervals on the linear scale.

To accomplish the first object described above, the count means of the digital camera converts the frequency counted for each of the sections set at equal intervals on the linear scale into the frequency for each of the sections set at equal intervals on a logarithmic scale, and the output means stores the converted frequency in the file.

To accomplish the first object described above, a file output method includes an image capturing step of converting a subject image into image data; a storage step of storing the subject image as the image data output in the image capturing step; a count step of counting frequency of gray scale levels of the subject image stored in the storage step for each predetermined section; and an output step of storing the subject image stored in the storage step and the frequency for each predetermined section counted in the count step in one file and outputting the file. The file output method makes it possible to shorten the time required for displaying the frequency distribution of gray scale levels of the subject image.

To accomplish the first object described above, a file output program causes a digital camera to function as image capturing means for converting a subject image into image data; storage means for storing the subject image as the image data output from the image capturing means; countmeans for counting frequency of gray scale levels of the subject image stored in the storage means for each predetermined section; and output means for storing the subject image stored in the storage means and the frequency for each predetermined section counted by the countmeans in one file and outputting the file. The file output program makes it possible to shorten the time required for displaying the frequency distribution of gray scale levels of the subject image.

To accomplish the first object described above, an image data structure is a structure in which image data representing a subject image and frequency of gray scale levels of the subject image represented by the image data for each predetermined section are included in one file. The image data structure makes it possible to shorten the time required for displaying the frequency distribution of gray scale levels of the subject image.

To accomplish the second object described above, an image quality display includes input means for inputting a file; and display means for displaying based on the file that is input by the input means and includes image data representing a subject image and the frequency of gray scale levels of the subject image for each predetermined section in one file, a graph representing the subject image and the frequency of gray scale levels of the subject image. According to the image quality display, the graph is displayed based on the frequency of gray scale levels of the subject image counted for each predetermined section, so that the frequency distribution of gray scale levels of the subject image can be displayed in a short time.

To accomplish the second object described above, in the image quality display, the frequency counted for each of sections set at equal intervals on a linear scale is converted into the frequency for each of sections set at equal intervals on a logarithmic scale and the graph representing the frequency for each of the sections set at equal intervals on the logarithmic scale is displayed.

Best Mode for Carrying out the Invention

The best mode for carrying out the invention will be discussed below based on embodiments.

(First embodiment)

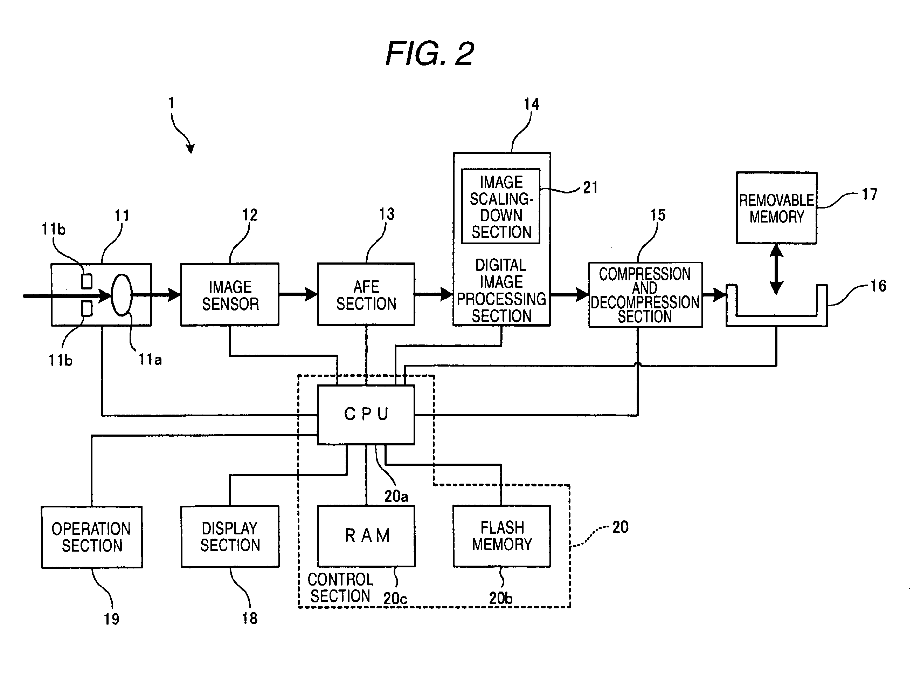

FIG. 2 is a block diagram to show the hardware configuration of a digital still camera (DSC) 1 as a digital camera and an image quality display according to a first embodiment of the invention.

An optical system 11 is made up of a plurality of lenses 11a, apertures 11b, etc. The optical system 11 forms a subject image on the light reception face of an image sensor 12.

The image sensor 12 is an image capturing device including photoelectric conversion elements placed discretely in a two-dimensional space and charge transfer device such as CCD (charge coupled device), and is a so-called CCD image sensor, CMOS image sensor, etc. The image sensor 12 is driven by a sensor controller not shown. The image sensor 12 stores charges provided by performing photoelectric conversion of the subject image formed on the light reception face by the optical system 11 for a given time for each photoelectric conversion element, and outputs an electric signal responsive to the light reception amount for each photoelectric conversion element. The image sensor 12 can be provided on the light reception face with four color filters of C (Cyan), M (Magenta), Y (Yellow), and G (Green) or three color filters of R (Red), G (Green), and B (Blue) for inputting color image information. The exposure amount of the image sensor 12 is determined by the F-stop number of the aperture 11b and the open time of a mechanical shutter not shown, provided between the optical system 11 and the image sensor 12. The exposure time of the image sensor 12 may be adjusted by electrically controlling the charge storage time of the image sensor 12.

An analog front end (AFE) section 13 quantizes the electric signal output from the image sensor 12 to a digital signal by an AD converter and outputs the digital signal. Specifically, for example, the AFE section 13 performs CDS (Correlated Double Sampling) processing of reduction processing of noise contained in the electric signal, optical black clamp control to reproduce the black level of an image, level adjustment processing of the electric signal by adjusting the gain of the electric signal of the image, quantization processing, etc., and outputs RAW data to a digital image processing section 14. In a mode of storing an image in a RAW format, the AFE section 13 outputs data provided by simply performing AD conversion of the output of the image sensor 12 to an external storage section 16 as it is.

Here, the RAW data refers generally to data provided by simply digitalizing an electric signal output from an image capturing device. Unlike JPEG data, a file in the RAW format is not determined by international standard and the format can be determined as desired. Digital data into which a CCD output signal is converted by the AFE section 13 as it is as well as image capturing information occurring at the image capturing time in the camera, the image size, the number of bits representing the gray scale level number per pixel, color filter arrangement information of the sensor, and the like is stored in the file in the RAW format in the embodiment. The data corresponding to the sensor output stored in the file in the RAW format (digital data into which the output signal of the image sensor 12 is simply converted) is referred to as RAW data in the embodiment. For example, in JPEG format, the gradation of each channel of Y, Cb, and Cr is limited to eight bits and thus if an image capturing device captures a color tone in 12 to 16 bits, for example, the color tone cannot perfectly be reproduced and because of irreversible compression, degradation of the image quality cannot be avoided. The gradation limitation of eight bits is not placed on the RAW data and the RAW data need not be irreversibly compressed either. Thus, an image is stored in the RAW data, whereby the image can be stored without decreasing the information amount. The RAW data is not limited to the data output from the AFE section 13 and may be data subjected to a part of processing performed by the digital image processing section 14, for example. A scaled-down image in the JPEG format may be attached to a file in the RAW format. Although the RAW data cannot be displayed unless image formation processing is performed, for example, if the DSC 1 reads the scaled-down image in the JPEG format attached to the RAW data, it is made possible for the DSC 1 to display the object represented by the RAW data at high speed.

The digital image processing section 14 performs image formation processing, white balance correction, gamma correction, color space conversion of converting from RGB color space to YCbCr color space, and the like for the RAW data output from the AFE section 13 and then outputs image data represented in the YCbCr color space. Here, the image formation processing refers to, for example, processing of forming a color image having gray scale levels of three primary colors of R, G, and B for each pixel by interpolating the gray scale level of each pixel acquired in only one color based on the stored charges of each photoelectric conversion element for receiving light passing through a specific color filter with nearby pixels.

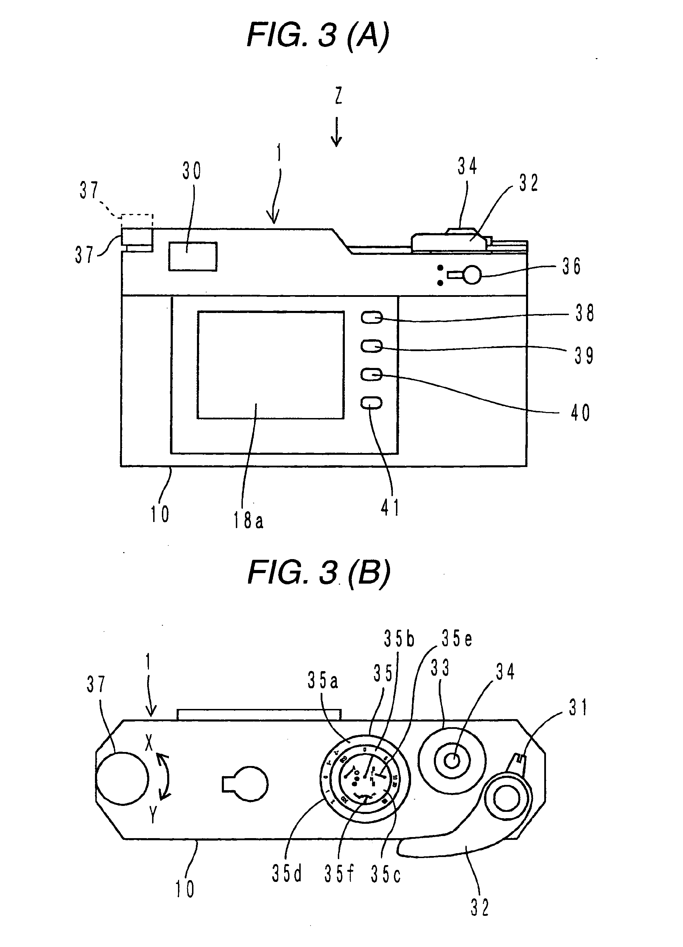

The digital image processing section 14 includes an image scaling-down section 21. The image scaling-down section 21 scales down an image and outputs the scaled-down image (hereinafter, referred to as scaled-down image). The image size of the scaled-down image is set by a control section 20. For example, to display an image stored in removable memory 17 on a screen of an LCD 18a (see FIG. 3 (A)), the image scaling-down section 21 scales down the image to the screen size of the LCD 18a. Of course, the image scaling-down section 21 can also scale down the image to any other size. The scaled-down image generated by the image scaling-down section 21 is output to the removable memory 17 in association with the original image by the external storage section 16. The image scaling-down processing may be executed by a program executed in a CPU 20a.

A compression and decompression section 15 compresses the image data output from the digital image processing section 14 and decompresses the compressed image data. The compression and decompression section 15 specifically compresses the image using the JPEG format of an irreversible compression method or a reversible compression method not involving discard of data, for example. The compression and decompression section 15 is also configured so as to be able to convert the image data into image data in a TIFF format not performing compression. In the image storing mode in the RAW format, the compression and decompression section 15 may perform no operation or may reversibly compress the RAW data. In the description of the embodiment to follow, the compression and decompression section 15 performs compression and decompression processing complying with the JPEG standard.

The external storage section 16 includes a card slot for connecting the removable memory 17 as storage means, a memory controller, and the like. The external storage section 16 is controlled by the control section 20 and performs processing of writing the image data compressed by the compression and decompression section 15, the RAW data output from the AFE section 13, etc., into the removable memory 17 and processing of reading the data stored in the removable memory 17.

A display section 18 includes the LCD (Liquid Crystal Display) 18a, a display controller for controlling the LCD 18a, and the like. The display section 18 is controlled by the control section 20 and displays various menus, images, graphs, etc., on the screen of the LCD 18a. In a playback mode, the display section 18 displays the primary image or the scaled-down image generated by the image scaling-down section 21 on the screen of the LCD 18a based on the image data read from the removable memory 17 by the external storage section 16 and decompressed by the compression and decompression section 15.

An operation section 19 includes a shutter button, a dial switch to set an exposure condition and other various image capturing conditions, a plurality of push-button switches to operate various displayed menus, a jog dial, and the like. The control section 20 includes the CPU 20a, flash memory 20b, and RAM 20c as storage means. The CPU 20a executes a computer program stored in the flash memory 20b, thereby controlling the whole DSC 1. The CPU 20a executes a file output program stored in the flash memory 20b, thereby functioning as image capturing means, storage means, countmeans, and output means, and executes an image quality display program, thereby functioning as input means and display means. The various programs and data stored in the flash memory 20b may be down loaded from a predetermined sever through a network for storage or may be read from a computer-readable storage medium such as removable memory for storage. The RAM 20c is memory for temporarily storing various programs and data.

In the embodiment, "image capturing means" as claimed in Claims corresponds to the optical system 11, the image sensor 12, the AFE section 13, the digital image processing section 14, and the control section 20. "Output means" as claimed in Claims corresponds to the external storage section 16 and the control section 20. "Input means" as claimed in Claims corresponds to the external storage section 16 and the control section 20. "Display means" as claimed in Claims corresponds to the display section 18 and the control section 20.

Next, the appearance of the DSC 1 will be discussed.

FIG. 3 (A) is a rear view of the DSC 1 and FIG. 3 (B) is a top view of the DSC 1 from a Z direction shown in FIG. 3 (A). An optical finder 30 is provided for the user to visually check a subject.

A switch 31, a cocking lever 32, a dial switch 33, a shutter button 34, a rotary dial 35a, a jog dial 37, a display switch 38, a menu switch 39, an enter switch 40, and a cancel switch 41 make up the operation section 19.

The switch 31 is a power switch. The cocking lever 32 is provided for performing operation to cock a shutter screen with a shutter mechanically released so as to allow the next shutter operation and mechanically fix the shutter. The user cocks the cocking lever 32 for shutter charge before image capturing, thereby placing the mechanical shutter in an image capturing operation enable state. The dial switch 33 is a rotary switch to select and set the shutter speed, the type of image capturing condition, etc. The shutter button 34 is disposed at the center of the dial switch 33. As the user pushes the shutter button 34, image capturing operation is started.

The outer periphery of a needle-type display section 35 installed adjacent to the dial switch 33 is the rotary dial 35a for enabling the user to adjust the exposure value in 1/3 EV steps in the range of -2 EV to +2 EV. The remaining number of images that can be picked up is displayed in a fixed ring 35b provided inside the rotary dial. White balance, data format, and battery remaining amount gradations representing the battery remaining amount are expressed on a dial plate 35c provided inside the fixed ring 35b. The data format specifically is expressed by a letter R representing the RAW format, a letter T representing the TIFF format, a letter H representing the JPEG format in high compression rate, and a letter N representing the JPEG format in low compression rate. The currently selected items and the battery remaining amount are indicated by needles 35d, 35e, and 35f. The user can change the selected item by rotating the jog dial 37 for moving the needle while operating a lever switch 36.

The jog dial 37 is provided so that it can rotate in XY directions and can move in the axial direction of the rotation axis. The jog dial 37 is provided so that it can rotate at two positions in the axial direction. In the description to follow, the position of the jog dial near to a cabinet 10 of the DSC 1 is called the lower position and the position where the jog dial 37 is lifted up from the lower position is called the upper position. In FIG. 3 (A), the jog dial 37 at the lower position is indicated by the solid line and the jog dial 37 at the upper position is indicated by the dashed line. The user uses the switches and the jog dial 37 in combination to make various settings and select functions.

The display switch 38, the menu switch 39, the enter switch 40, and the cancel switch 41 are installed to the right of the LCD 18a.

Next, the file output program will be discussed.

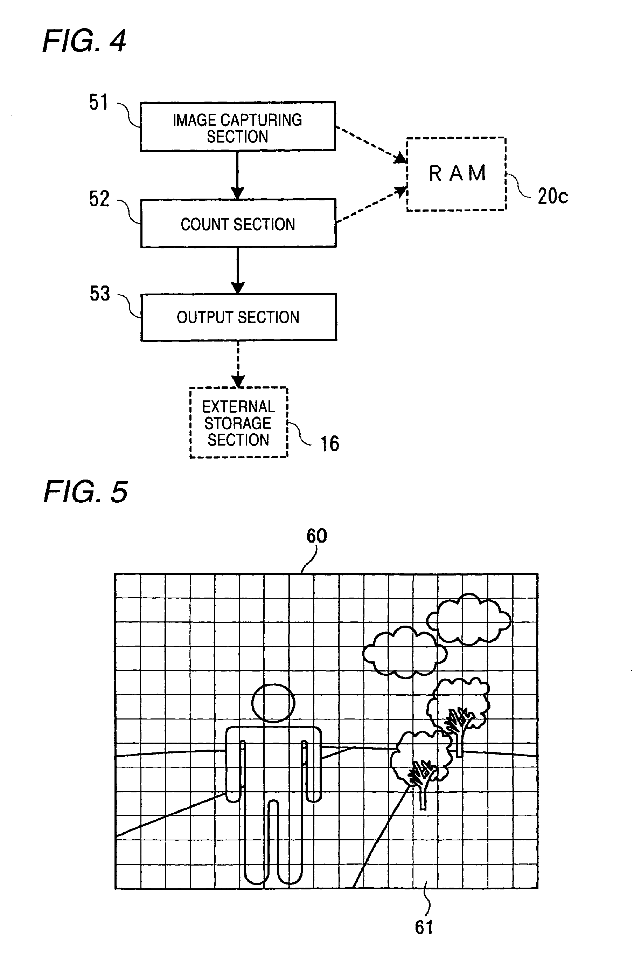

FIG. 4 is a block diagram to show the logical configuration of the file output program. The arrow indicated by the solid line in the figure means a flow of data and the arrow indicated by the dashed line points to a controlled object. The file output program includes an image capturing section 51 for causing the DSC 1 to function as image capturing means, a count section 52 for causing the DSC 1 to function as count means, and an output section 53 for causing the DSC 1 to function as output means.

The image capturing section 51 converts a subject image into image data. The image capturing section 51 controls the sections of the DSC 1, converts a subject image into image data, and stores the provided image data in the RAM 20c.

The count section 52 counts the frequency of gray scale levels of the subject image represented by the image data stored in the RAM 20c for each of sections set at equal intervals on a linear scale. In the description to follow, the counted frequency is called graph data. In the description to follow, the subject image represented by the image data is called simply image.

FIG. 5 is a schematic drawing to show an example of an image scanned to create graph data. In the description of the first embodiment, image data in the JPEG format is taken as an example. The image data in the JPEG format is image data represented in the YCbCr color space, and each pixel 61 is made up of three gradation values representing the gray scale levels of the channels of Y (brightness component), Cb (bluish component), and Cr (reddish component). In the embodiment, to represent a histogram of the gray scale levels of the brightness components of the pixels, the count section 52 counts a frequency distribution of the brightness components of an image. In the Description, the gray scale level represented by the brightness component is called the brightness value. The count section 52 may count a frequency distribution of the gray scale levels of the image represented by the gradation values of RGB about each gradation value of R, G, or B. Only the pixel values of a specific channel may be counted in such a manner that only the pixel values of the G channel are counted, for example.

In the first embodiment, to shorten the data creation time, the count section 52 creates graph data based on a scaled-down image. Frequency count in each section is conducted based on the scaled-down image, whereby the time required for processing to create graph data is shortened as compared with the case where frequency count is conducted based on the image before being scaled down.

Graph data may be created based on the primary image or may be created based on the image scaled down matching the display screen size for easy display in the screen size of the LCD 18a. Graph data may be created based on the image provided by scaling down the primary image to a different size from the primary image or the display image. Specifically, for example, graph data may be created based on the 3008x2000 primary image, may be created based on the scaled-down image provided by scaling down the primary image to a size of 640x425 as an easy-to-display size in the screen size of the LCD 18a, or may be created based on the 376x250 scaled-down image provided by scaling down the primary image to 1/8 in an up and down direction and to 1/8 from side to side. If the scaling-down rate is appropriate, the histogram displayed based on the graph data created based on the scaled-down image and the histogram displayed based on the graph data created based on the primary image almost match in shape, so that the count section 52 creates the graph data based on the scaled-down image, whereby graph data creation processing can be speeded up without impairing the function of the displayed histogram.

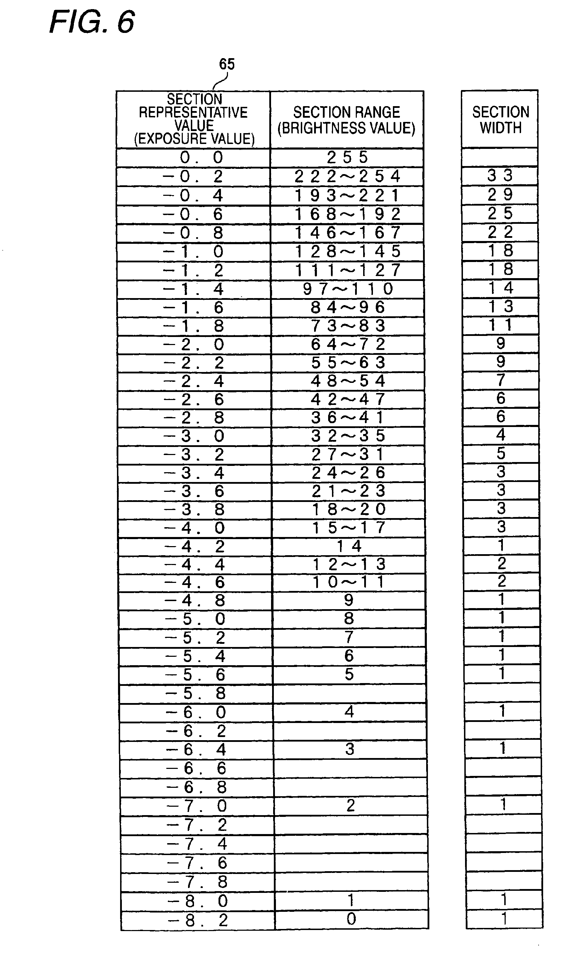

The count section 52 sets sections at equal intervals on a logarithmic scale and counts the frequency distribution of the brightness values of the image. A count table 65 shown in FIG. 6 is a table for associating the sections of a histogram set at equal intervals on the logarithmic scale and the brightness values of an image represented on the linear scale with each other. The section representative value of the logarithmic scale and the section range of the linear scale are set on each row of the count table 65. In the count table 65, the brightness value of the linear scale (x) and the brightness value of the logarithmic scale (EV) are associated with each other according to the relation of the following expression:

$$EV = Log_2 \ (x/255)$$

In the count table 65, the sections are set in the range of 0.0 to -8.2 on the logarithmic scale. 0.0 of the logarithmic scale corresponds to the maximum brightness value, and -8.2 of the logarithmic scale corresponds to the minimum brightness value. The minimum value 0 of the brightness value of the 8-bit linear scale is -∞ if it is represented on the logarithmic scale using the expression shown above. The minimum brightness value in the section with the representative value -8.2 is set to -∞ on the logarithmic scale. How much the minimum section of the EV scale is to be set low is a design item that can be determined in response to how much detail the frequency distribution in the low range of the brightness values is to be displayed.

The section representative value is a convenient value to show the relative exposure difference between the sections, and whether or not the representative value of the maximum section is represented as 0.0 is a design item that can be selected appropriately. For example, the brightness values 0 to 255 on the linear scale may be associated with the sections set in the range of 4.0 to -4.2 on the logarithmic scale. In the count table 65, the width of each section is set to 0.2 EV equivalent, but how the width of each section is to be set is a design item that can be selected appropriately. For example, the section width may be 1/10 EV or 1/20 EV, may be 1/3 EV, may be 1/6 EV, may be 1/9 EV, or may be furthermore fine 1/30 EV. Further, the section widths may be appropriate intervals such that the displayed histogram is seen so as to distribute more finely and smoothly.

FIG. 6 also shows the width of the range of the brightness values on the linear scale for each section where frequency count is conducted, namely, the section width. For example, for the section with the representative value -0.2 on the logarithmic scale, the brightness values of the linear scale corresponding to the section are 222 to 254 and therefore the section width is 33. If the sections of the brightness values are set at equal intervals on the logarithmic scale, consequently the correlation between the width of the linear scale of each section and the section representative value of the logarithmic scale can be appropriated according to a predetermined exponential function. Specifically, the larger the section representative value of the logarithmic scale, the wider the section width of the linear scale in accordance with the predetermined exponential function.

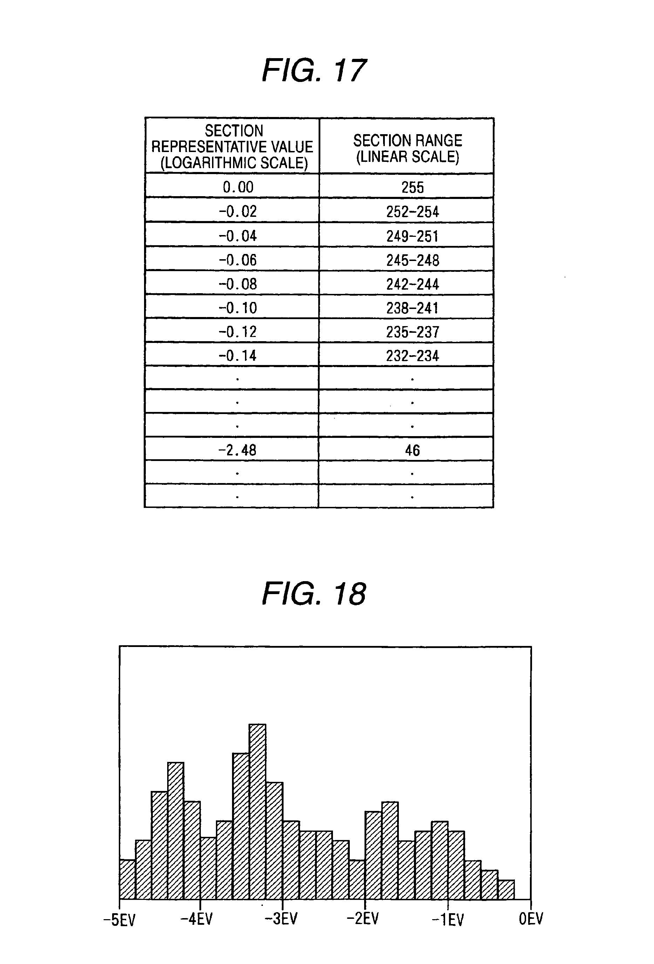

A count table shown in FIG. 17 is an example in which the sections are set more finely than the count table 65 in FIG. 6. To display a histogram finer than the histogram displayed according to the graph data created based on the count table 65 in FIG. 6, the sections may be set finely. For example, in section setting at intervals of 0.02 on the logarithmic scale with the base 2 as shown in FIG. 17, about 400 sections are set in the range of width 8 EV and thus a considerably fine histogram can be displayed. How much detailed histogram is to be displayed on the screen is a design item that can be selected appropriately. Generally, to display a histogram in the range of width 8 EV, a sufficiently fine histogram can be displayed if no less than 200 sections exist. For example, if the sections are set at intervals of 0.04 on the logarithmic scale with the base 2, a considerably fine histogram can be displayed. In the description of the embodiment, the brightness value is represented on the 8-bit linear scale, but the brightness value of the linear scale can be represented in any other number of bits such as 10 bits or 12 bits, of course. The association of the brightness value of the logarithmic scale (EV) and the brightness value of the linear scale (x) with each other is $EV = Log_2 \ (x/1023)$ if the brightness value of the linear scale is 10-bit representation or is $EV = Log_2 \ (x/4095)$ if the brightness value of the linear scale is 12-bit representation. As described above, the base of the logarithm is set to 2, whereby the scale of the exposure value and the scale of the brightness value can be matched with each other.

The count section 52 initializes the frequency of each section to 0 and then references the count table 65 about the brightness value of each of the pixels making up the scaled-down image to determine the section to which the pixel belongs, and adds one to the frequency of the determined section, thereby counting the frequency. The frequencies thus counted about all sections are output to the output section 53 as graph data.

The frequency may be counted in a given section width on the linear scale before the count table 65 is referenced instead of referencing the count table 65 for each pixel to determine the section to which the pixel belongs. Specifically, for example, for the image made up of pixels having the brightness values of 256-step gradation from 0 to 255 on the linear scale, the frequency distribution of the brightness values is found with the section width of each section set to 1 on the linear scale. Here, the section whose section width is 1 on the linear scale is called primary section and the sections set at equal intervals on the logarithmic scale are called secondary sections. Next, while the count table 65 is referenced, the secondary sections corresponding to all primary sections are determined and the frequency of the primary section where the corresponding secondary section becomes the same is counted and the counted frequency is adopted as the frequency of the secondary section. Finding the frequency distribution of the brightness values of the linear scale with all sections set to a given width on the linear scale is also performed formerly, so that a circuit or a program in a related art can be used for the processing of finding the frequency distribution of the brightness values of the linear scale with all sections set to the given width on the linear scale.

Frequency count may be conducted for the image subjected to gamma correction or may be conducted for the image not subjected to gamma correction. For a general image with gamma of 1/2.2, the relation between the brightness value Y of the image after being subjected to gamma correction and the brightness value X of the image before being subjected to gamma correction is represented by the following expression:

$$Y = X^{1/2.2}$$

Therefore, the brightness value EV of the logarithmic scale of the image after being subjected to gamma correction is represented by the following expression:

$$EV = Log_2 Y = Log_2 X^{1/2.2} = (1/2.2) \times Log_2 X$$

Therefore, the histogram displayed according to the graph data created based on the gamma-corrected image is displayed in the form in which it is compressed in the section axial direction by gamma value. For example, to display the histogram so that the brightness values of the image before being subjected to gamma correction are distributed to sections from -8 EV to 0 EV, the brightness values of the image after being subjected to gamma correction with gamma set to 1/2.2 are distributed to sections from -3.64 EV to 0 EV. For example, to display the histogram so that the brightness values of the image before being subjected to gamma correction are distributed to sections from -5 EV to 0 EV, the brightness values of the image after being subjected to gamma correction with gamma set to 1/2.2 are distributed to sections from -2.27 EV to 0 EV.

The output section 53 stores the image stored in the RAM 20 by the image capturing section 51 and the frequency for each of the sections set at equal intervals on the logarithmic scale, counted by the count section 52, namely, graph data in one file and outputs the file. Specifically, the output section 53 controls the external storage section 16 to create a file in the removable memory 17 and writes image data representing an image and the graph data of the image into the created file. The DSC 1 may be provided with a network interface through which the output section 53 transmits a file to another apparatus for outputting the file. In the description to follow, the output file is called image file.

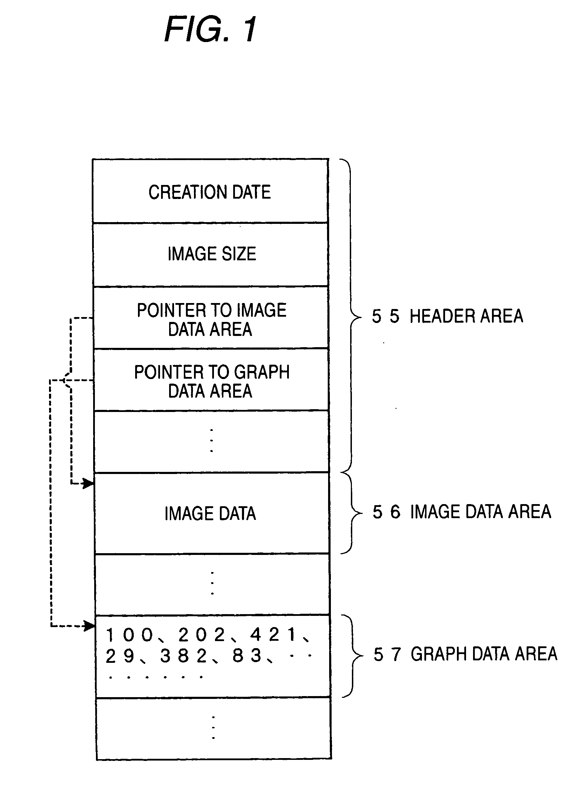

FIG. 1 is a schematic drawing to show the structure of an image file. The image file is made up of a header area 55, an image data area 56, and a graph data area 57. The header area 55 is an area to record header information of the creation date, the image size, a pointer pointing to the top address of the image data area 56, a pointer pointing to the top address of the graph data area 57, etc. The image data area 56 is an area to record the image data representing the image. The image data may be recorded in the JPEG format or may be recorded in the TIFF format, the bit map format, etc., for example. The graph data area 57 is an area to record the graph data. In the graph data area 57 shown in the figure, the frequencies of the sections are separated by a comma for storage in order from the frequency of the section determined by the section representative value "-8.2." To play back, the pointers are read from the header area, whereby the top address of the image data area and the top address of the graph data area can be determined and accordingly the image data and the graph data can be read. Here, the method of storing the histogram frequencies on the logarithmic scale in the file is shown, but the stored frequency data may be the histogram frequencies on the linear scale.

Next, a processing flow of outputting an image file by the DSC 1 will be discussed.

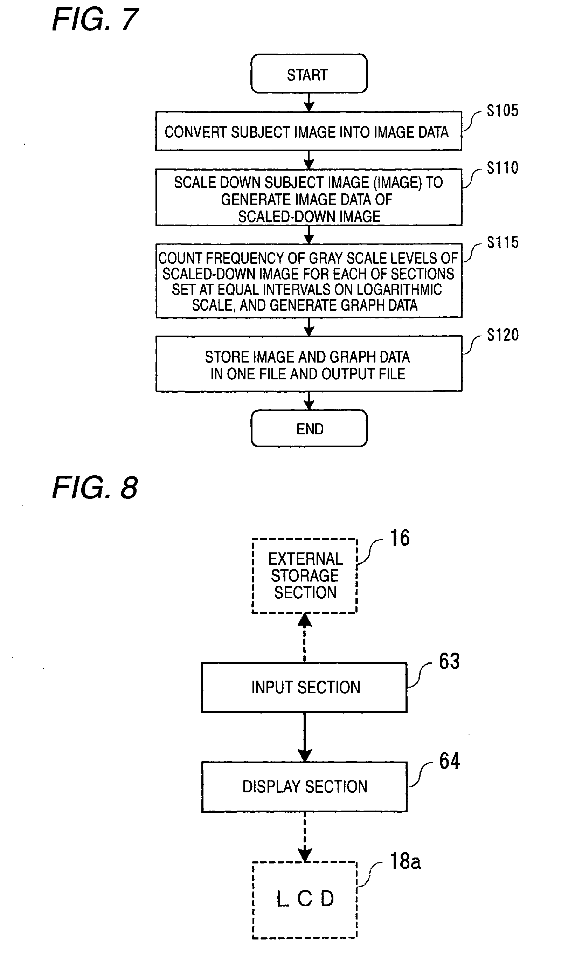

FIG. 7 is a flowchart to show the processing flow of outputting an image file by the DSC 1.

At S105, the DSC 1 converts a subject image into image data. Specifically, the image capturing section 51 controls the sections of the DSC 1 and converts the subject image into image data. When converting the subject image into image data, the image capturing section 51 stores the provided image data in the RAM 20c.

At S110, the image scaling-down section 21 scales down the stored image to generate image data of the scaled-down image.

At S115, the count section 52 counts the frequency of gray scale levels of the generated scaled-down image for each of the sections set at equal intervals on the logarithmic scale, and generates graph data.

At S120, the output section 53 stores the stored image and the generated graph data in one file and outputs the file to the removable memory 17.

In the processing at S105 to S115, the DSC 1 once scales down the image and calculates the frequencies of the gray scale levels about the scaled-down image data, but may directly calculate the frequencies of the gray scale levels about the original large image data without scaling down the image. In calculating the frequencies of the gray scale levels in the processing at S105 to S115, the frequency may be counted for each of the sections set at equal intervals on the linear scale instead of counting the frequency for each of the sections set at equal intervals on the logarithmic scale.

Next, the image quality display program will be discussed.

FIG. 8 is a block diagram to show the logical configuration of the image quality display program. The arrow indicated by the solid line in the figure means a flow of data and the arrow indicated by the dashed line points to a controlled obj ect. The image quality display program includes an input section 63 for causing the DSC 1 to function as input means and a display section 64 for causing the DSC 1 to function as display means.

The input section 63 controls the external storage section 16 to read an image file from the removable memory 17 into the RAM 20c. The input section 63 may input an image file by down loading data from another apparatus through a network interface.

The display section 64 displays various menus, the image stored in the removable memory 17, the histogram of the image, etc., on the LCD 18a.

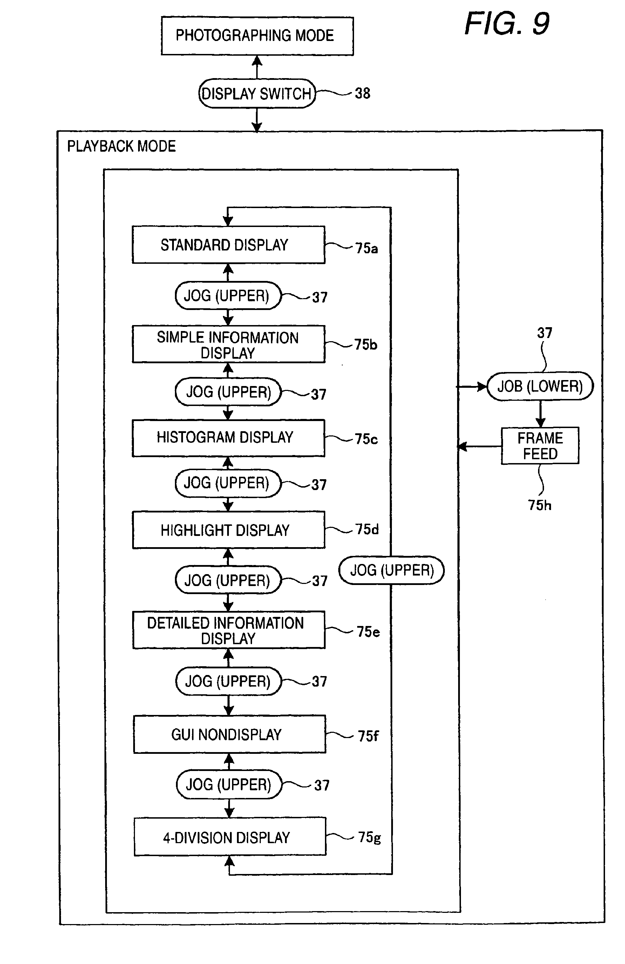

FIG. 9 is a schematic drawing to describe a GUI of the DSC 1. When the power is turned on, the DSC 1 is started and makes a transition to an image capturing mode. This image capturing mode is a mode of picking up an image. When the shutter button 34 is pressed in the image capturing mode, the image capturing section 51 starts the operation of picking up a subject image, performs various types of processing for the signal output from the image sensor 12, generates image data representing the subject image, and stores the generated image data on external memory card 17 through the external storage section 16. When the display switch 38 is pressed in the image capturing mode, the DSC 1 makes a transition to a playback mode.

The playback mode is a mode of displaying the image stored in the removable memory 17 on the LCD 18a. When the jog dial 37 is set to the lower position in the playback mode, if the user rotates the jog dial 37, the image files stored in the removable memory 17 are selected in a predetermined order (75h). When the image file is selected, the image stored in the selected image file is displayed on the LCD 18a. The image files are selected in the ascending or descending order of the image file names containing the consecutive numbers given to the image files in the image capturing order at the image capturing time. That is, when the jog dial 37 is rotated to the right, the images are selected in the image capturing order; when the jog dial 37 is rotated to the left, the images are selected in the opposite order to the image capturing order. The images may be selected in the order of image capturing dates and times rather than in the order of the image file names.

In the playback mode, the DSC 1 displays the scaled-down image, the primary image, or various pieces of attached information to the primary image stored in the image file selected at the time. The DSC 1 specifically provides a plurality of playback modes of standard display 75a, simple information display 75b, histogram display 75c, highlight display 75d, detailed information display 75e, GUI nondisplay 75f, and 4-division display 75g. When the user rotates the jog dial 37 at the upper position, the display section 64 displays the scaled-down image, the primary image, or the attached information in the playback mode responsive to the rotation.

In a specific playback mode in which a specific image file is selected, when the jog dial 37 rotates at the lower position, the image file preceding or following the specific image file is newly selected and the scaled-down image, the primary image, or the attached information in the newly selected image file is displayed in the playback mode intact.

In the standard display 75a, the scaled-down image or the primary image and "image number/total number of images" are displayed. When a specific image file is selected, the display section 64 may first display the scaled-down image and then display the primary image. In any other playback mode for displaying images, likewise, when a specific image file is selected, the display section 64 may first display the scaled-down image and then display the primary image.

In the simple information display 75b, the scaled-down image or the primary image and current "image number/ total number of images," file number, image capturing quality, file protection, and image capturing date and time are displayed on one screen.

In the histogram display 75c, the scaled-down image or the primary image and current "image number/total number of images" and the histogram created based on the graph data stored in the selected image file are displayed on one screen. The histogram display method is described later. In the histogram display 75c, only the histogram may be displayed on one screen without displaying any image.

In the highlight display 75d, a white spot of the scaled-down image or the primary image is displayed on the scaled-down image.

In the detailed information display 75e, the scaled-down image or the primary image and current "image number/total number of images," file number, image capturing quality, file protection, image capturing date and time, file number, shutter speed, white balance (WB), resolution, and film setting are displayed on one screen.

In the GUI nondisplay 75f, the scaled-down image or the primary image is displayed.

In the 4-division display 75g, the scaled-down images of the images stored in the four image files with the consecutive file names are displayed in the four areas into which one screen is divided.

When the histogram display 75c is selected, the display section 64 uses the graph data stored in the selected image file to create a histogram as a graph.

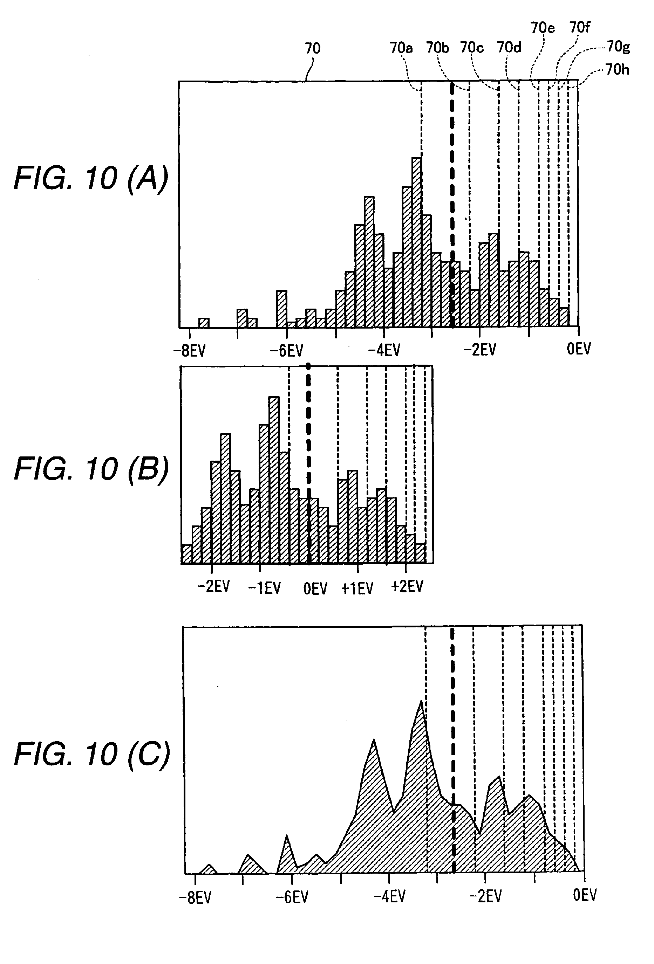

FIG. 10 (A), FIG. 10 (B), and FIG. 10 (C) are schematic drawings to show examples of histograms displayed on the LCD 18a by the display section 64. In the examples shown in FIG. 10 (A) and FIG. 10 (B), the frequency of each section is represented by the area of the rectangle with the section as the bottom. Since the width of each rectangle with the section as the bottom is fixed, the frequency of each section is also represented by the height of the rectangle.

In the histogram shown in FIG. 10 (C), the frequency of each section is represented by the height of the polygonal line. The ratio between the height or the area of each section represented in the histogram and the frequency of each section can be set as desired.

It is desirable that the display section 64 should display gradations of the section axis. Specifically, the gradations are arranged in the section axial direction, for example, as shown in FIG. 10 (A), FIG. 10 (B), and FIG. 10 (C). The gradations are arranged in the section axial direction at interval 1, whereby it is made possible for the user to easily understand how much the pixel values of pixels are distributed in the 1-EV unit width, so that exposure correction is furthermore facilitated. It is desirable that digits representing the scale of the section axis with the logarithm of base 2 should be added to the gradations. The gradations and the digits of the logarithmic scale with the base 2 are added to the gradations of the section axis, whereby the user can keep track of the correspondence between the sections and the exposure values and can easily know how many steps the exposure condition is adjusted in on the EV scale to set appropriate exposure.

By the way, generally it is said that the optimum exposure is the light amount of an object with reflectivity 18%. The exposure condition such that the average value or the center value as the representative value of the brightness values of an image corresponds to the light amount can be a proper exposure condition. Then, it is desirable that the display section 64 should display a graph for guiding the section corresponding to the average value of the brightness values of an image picked up under the proper exposure condition. A heavy dashed line passing through the section and being parallel with the longitudinal axis is displayed, for example, as shown in FIG. 10 (A), FIG. 10 (B), and FIG. 10 (C). The display section 64 sets sections so that the section is positioned at the center of the horizontal axis and displays a histogram with the center section representative value set to 0, for example, as shown in FIG. (B).

The average value as the representative value of the brightness values of an image picked up under the proper exposure condition is set as follows: For example, to record reflected light of 0% to 100% with the brightness values 0 to 255, the brightness value corresponding to the reflected light of 18% is 46. Therefore, if the brightness value x of the linear scale and the brightness value EV of the logarithmic scale are associated with each other according to $EV = Log_2(x/255)$, the section of -2.47 EV (= $Log_2(46/255)$) is the section corresponding to the average value of the brightness values of an image picked up under the proper exposure condition. To record reflected light of 0% to 120% with the brightness values 0 to 255 with a digital camera for recording to a brighter place, the brightness value corresponding to the reflected light of 18% is 38. Therefore, if the brightness value x of the linear scale and the brightness value EV of the logarithmic scale are associated with each other according to $EV = Log_2(x/255)$, the section of -2.74 EV (= $Log_2(38/255)$) is the section corresponding to the average value of the brightness values of an image picked up under the proper exposure condition. These are examples where gamma is 1.

For the image after being subjected to gamma correction with gamma set to 1/2.2, the representative value of the brightness values of an image picked up under the proper exposure condition is calculated as follows: To record reflected light of 0% to 100% with the brightness values 0 to 255, the brightness value after gamma correction corresponding to the reflected light of 18% is 118. Therefore, if the brightness value x of the linear scale (before gamma correction) and the brightness value EV of the logarithmic scale (after gamma correction) are associated with each other according to $EV = Log_2(x/255)$, the section of -1.12 EV (= $Log_2(0.18^{1/2.2})$) is the section corresponding to the average value of the brightness values of an image picked up under the proper exposure condition. It is 1/2.2 times the brightness value before gamma correction, -2.47 EV. To record reflected light of 0% to 120% with 0 to 255, according to similar calculation, the section of -1.24 EV, 1/2.2 times -2.74 EV is the section corresponding to the average value of the brightness values of an image picked up under the proper exposure condition.

Gradations of a gray scale rather than the characters representing the exposure values added to the gradations (-8 EV to 0 EV) may be displayed along the horizontal axis. The histogram need not necessarily show the frequency distribution in the entire range. The histogram may be displayed in the range of -5 EV to 0 EV based on the frequency distribution count result from 0.0 EV to -8.2 EV, for example, as shown in FIG. 18.

A plurality of dashed lines 70a to 70h as guide indicate the sections set at equal intervals on the linear scale. For example, assume that the brightness value range of 0 to 255 is divided into eight sections each with width 32 at equal intervals. In this case, for example, the upper limit brightness value in the section of 0 to 31 is 31 and thus the display section 64 displays the dashed line 70a passing through exposure value "-3.2" EV corresponding to the brightness value 31 and being parallel with the longitudinal axis and in the next section, displays the dashed line 70b passing through exposure value "-2.2" EV corresponding to the brightness value 63 and being parallel with the longitudinal axis. In any other section, the display section 64 displays the dashed line in a similar manner. Therefore, the dashed line indicates the boundary between the sections set at equal intervals on the linear scale. That is, a histogram 70 shows the frequency of each of the sections set at equal intervals on the logarithmic scale as the area of each rectangle of the histogram and shows the frequency of each of the sections set at equal intervals on the linear scale by the sum of the areas of a plurality of rectangles sandwiched between two dashed lines indicating the boundaries between the sections set at equal intervals on the linear scale. In the first embodiment, the boundary between the sections set at equal intervals on the linear scale is displayed by the dashed line, but at the position of each dashed line of the horizontal axis, the brightness value corresponding to the dashed line may be added as digits without displaying the dashed line. The dashed lines 70a to 70h need not be displayed if they are not required.

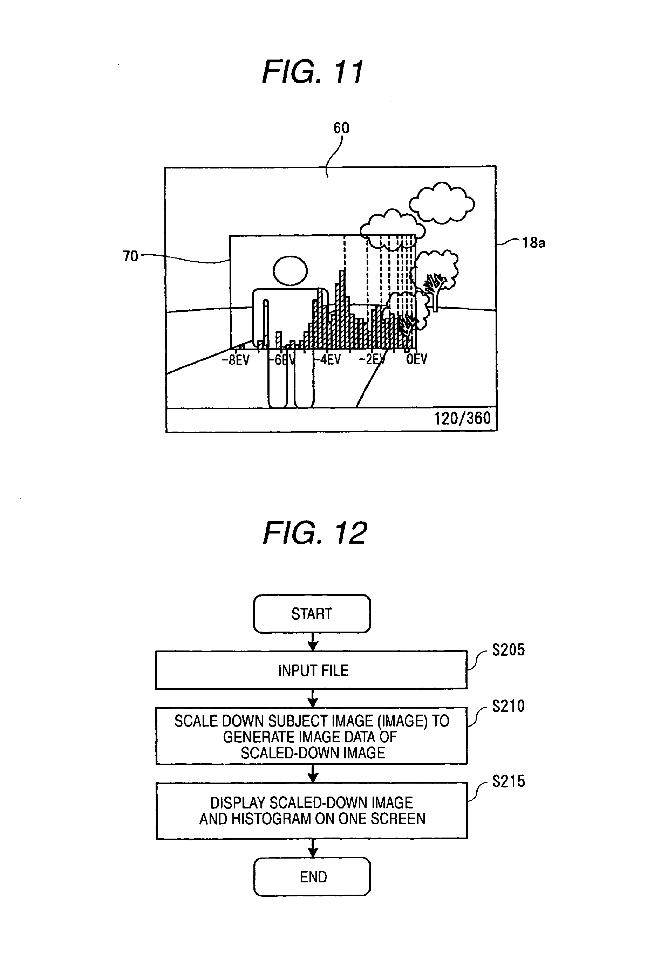

FIG. 11 is a schematic drawing to show a state in which a screen on which an image 60 and the histogram 70 are superposed on each other is displayed on the LCD 18a. In the first embodiment, the display section 64 displays the background of the histogram 70 transparent, as shown in the figure. Specifically, the display section 64 displays only the components of the histogram 70 such as the rectangles indicating frequencies, the longitudinal axis, the horizontal axis, etc., on the image 60. If such display is produced, the user can also check the image 60 in the area corresponding to the background of the histogram 70, so that the area of the image 60 hidden by the histogram 70 can be lessened. The display section 18 may put the background of the histogram 70 on the image 60 without making the background transparent or may put the rectangles indicating frequencies on the image with the rectangles made translucent. Preferably, the display section 64 mixes them at the transmittance of the image 60 as 50% and the transmittance of the histogram 70 as 50% for display in a translucent state in the rectangle area in which the histogram 70 is displayed.

Next, a processing flow of displaying an image and a histogram by the DSC 1 will be discussed. FIG. 12 is a flowchart to show the processing flow of displaying an image and a histogram by the DSC 1. At S205, the DSC 1 inputs an image file. Specifically, the input section 63 reads the image file selected in response to rotation of the jog dial 37 at the lower position from the removable memory 17.

At S210, the DSC 1 scales down the image stored in the read image file to generate image data of the scaled-down image.

At S215, when the user selects the histogram display 75c, the DSC 1 superposes the scaled-down image and the histogram on each other on the LCD 18a, as shown in FIG. 11.

The DSC 1 according to the first embodiment of the invention described above stores an image and graph data of the image in one file. Thus, when displaying a histogram representing the frequency distribution of the brightness values of an image, the DSC 1 reads the graph data from the image file, whereby the time required until the histogram is displayed can be shortened as compared with the case where the frequencies are counted after a histogram display command is given. Thus, the DSC 1 makes it possible to shorten the time required for displaying the frequency distribution of the brightness values of the image.

If the image and the graph data are stored in one file, the portability of the image and the graph data improves as compared with the case where they are stored in separate files.

The frequency distribution of the brightness values of the image is represented by a histogram with the section axis on the logarithmic scale, whereby the frequency distribution of the brightness values represented by the histogram and the frequency distribution of the brightness values perceived by the user as the user sees the image almost match. Therefore, the frequency distribution shown by the histogram according to the first embodiment is easy to understand through intuition in a sense concerning the brightness that the user seems to perceive when the user sees the image. The image and the histogram representing the frequency distribution of the brightness values are displayed on one screen, so that the user can make a comparison between the histogram and the image on one screen and can easily understand the meaning indicated by the frequency distribution represented by the histogram. Thus, the DSC 1 can display the frequency distribution of the brightness values of the image in an easy-to-understand manner for the user.

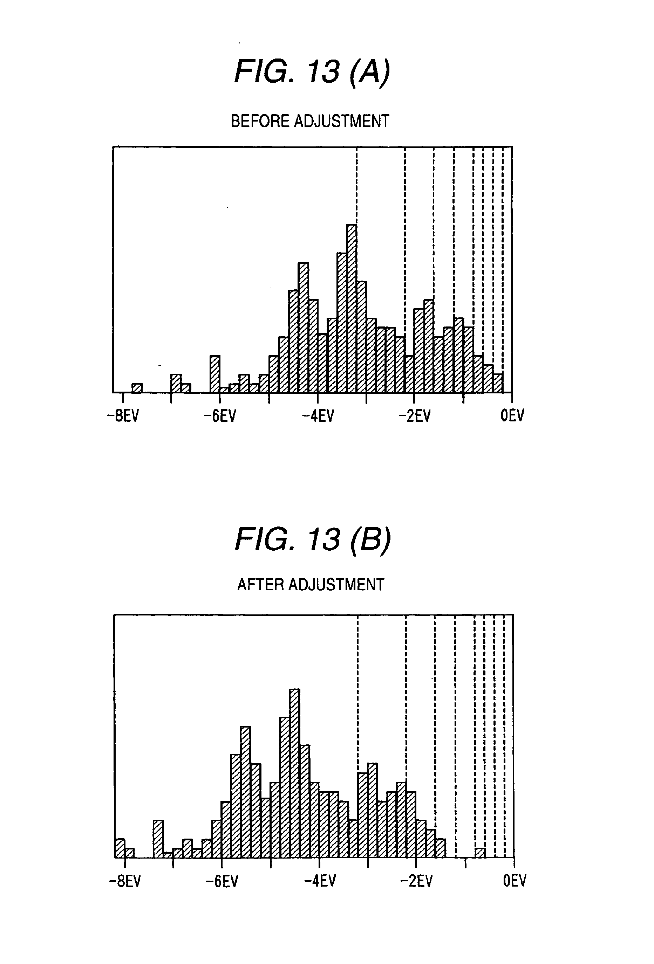

If a histogram with the section axis on the logarithmic scale is displayed, when the exposure condition is adjusted and an image of the same subject is picked up in the same environment and a histogram is displayed based on the picked-up image, before and after the exposure condition is adjusted, the histograms move only to the left or the right and do not change in shape, as shown in FIG 13 (A) and FIG. 13 (B). The fact that the histogram shape does not change if the exposure condition is changed when an image of the same subject is picked up is a large advantage provided as the section axis is the logarithmic scale. Thus, the user can adjust the exposure condition through intuition so that the brightness values after adjustment are distributed in a specific range based on the histogram before adjustment. Therefore, the user can easily capture an image with the exposure condition appropriately adjusted. When the user picks up an inappropriate image, the user can understand through intuition how much the exposure condition is to be adjusted for picking up an appropriate image.

Gradations are added to the section axis on the logarithmic scale with the base 2 and the same scale digits as the exposure values are added to the gradations, whereby the user can recognize the sections and the exposure values in direct association with each other and thus adjustment of the exposure condition is furthermore facilitated. Specifically, when a proper exposure condition is set if the histogram is moved in parallel in the section axial direction by width W on the gradations of the section axis, the user can capture an image of a subject under the proper exposure condition simply by adjusting the exposure condition so as to change the exposure value of the digital camera by W.

The DSC 1 displays the frequency distribution of the sections set at equal intervals on the linear scale and the frequency distribution of the sections set at equal intervals on the logarithmic scale as one histogram. Thus, the user can check the two frequency distributions on one histogram. Thus, the DSC 1 can display the frequency distribution of the sections set at equal intervals on the linear scale and the frequency distribution in which the exposure value can be adjusted through intuition in an easy-to-use manner.

In the first embodiment, the digital camera and the image quality display have been described by taking the DSC 1 as an example, but the image quality display may be a personal computer, a PDA, etc. The digital camera may be a digital video camera, a mobile telephone with a digital camera, a PDA with a digital camera, etc.

In the description of the first embodiment, the graph data is generated based on the image data in the JPEG format by way of example, but the graph data may be generated based on the RAW data and the generated graph data and the RAW data may be stored in one file.

(Second embodiment) In a second embodiment, the frequency is counted for each of sections set at equal intervals on a linear scale. Specifically, for example, a DSC according to the second embodiment counts the frequency for each brightness value of the linear scale about the image stored in RAM 20c and sums up the counted frequency for each brightness value for each of the sections set at equal intervals on the linear scale. For example, assume that each section width is 8 on the linear scale and the range of 0 to 255 is divided into 32 sections at equal intervals. In this case, the DSC sums up the frequencies of the brightness values of 0 to 7 about the first section. The DSC sums up the frequencies of the brightness values of 8 to 15 about the next section. Similarity also applies to other sections. Consequently, the frequency for each of the sections at equal intervals of the width 8 on the linear scale is counted. Of course, for an image with the brightness value represented in eight bits, the section width may be 1 on the linear scale and the frequency distribution of 256 sections of 0 to 255 may be counted.

In the second embodiment, the DSC displays a histogram on the LCD 18a based on the graph data counted for each of the sections set at equal intervals on the linear scale, thereby displaying the histogram representing the frequency for each of the sections set at equal intervals on the linear scale.

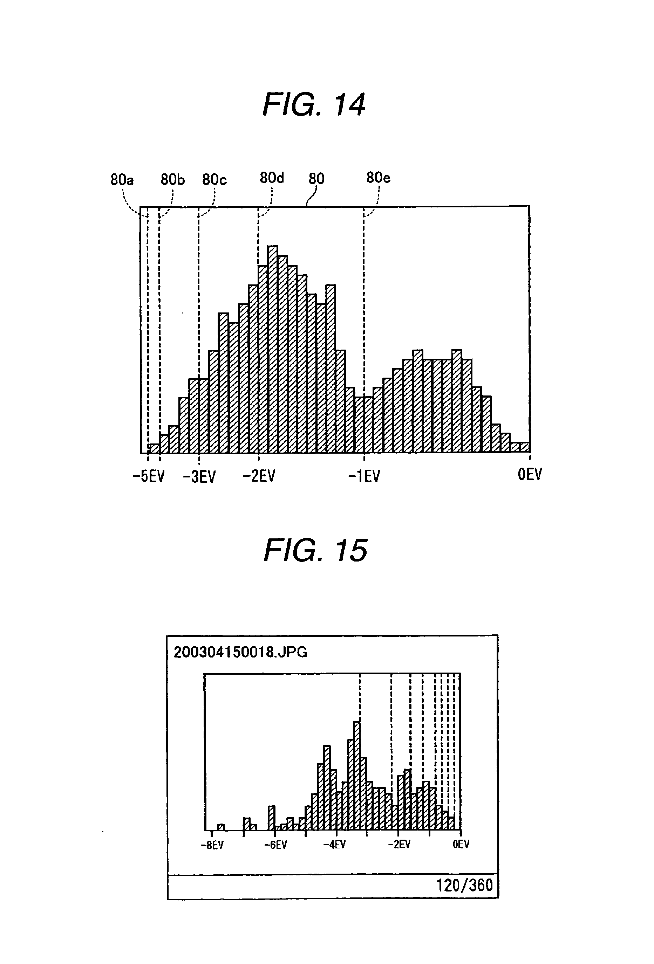

FIG. 14 is a schematic drawing to show a histogram of the second embodiment. In the second embodiment, the DSC displays guide indicating the sections set at equal intervals on the logarithmic scale for the histogram displayed based on a frequency distribution table with the section width fixed on the linear scale, thereby displaying the frequency distribution with the sections set at equal intervals on the linear scale and the frequency distribution with the sections set at equal intervals on the logarithmic scale as one histogram. Each rectangle corresponds to each of the sections divided at equal intervals on the linear scale.

A plurality of dashed lines 80a, 80b, 80c, 80d, and 80e as guides indicate the sections set at equal intervals on the logarithmic scale. If the dashed lines 80a, 80b, 80c, 80d, and 80e are shown with spacing corresponding to 0.2 EV, the number of dashed lines increases and the dashed lines become hard to see. Thus, in the second embodiment, the dashed lines 80a, 80b, 80c, 80d, and 80e are shown with spacing corresponding to 1 EV. Since the spacing between two of the dashed lines 80a to 80e is 1 on the logarithmic scale, the dashed lines 80a to 80e guide the user as the sections each with the width 1 on the logarithmic scale. That is, the user can recognize the frequency of brightness values for each section with the width 1 on the logarithmic scale according to the total sum of the areas of the rectangles sandwiched between the adjacent dashed lines. The dashed lines 80a to 80e need not be displayed if they are not required. The second embodiment is substantially the same as the first embodiment in other points.

(Third embodiment)

In a third embodiment, a histogram representing the frequency for each of sections set at equal intervals on the logarithmic scale is displayed based on graph data provided by counting the frequency for each of sections set at equal intervals on the linear scale. Specifically, a DSC according to the third embodiment determines the exposure value corresponding to each of the sections set at equal intervals on the linear scale by referencing a count table 65, and adds the frequency of the section of the graph data to the count value of the determined exposure values. Accordingly, the DSC converts into the frequency for each of the sections set at equal intervals on the logarithmic scale. After the count, the DSC displays a histogram representing the frequency for each of the sections set at equal intervals on the logarithmic scale as in the first embodiment. To display the histogram representing the frequency for each of the sections set at equal intervals on the logarithmic scale based on the graph data provided by counting the frequency for each of the sections set at equal intervals on the linear scale, an image is selected before count is executed, and thus the time for count becomes necessary. However, count needs only to be executed for 256 pieces of graph data of 0 to 255 and thus count can be executed in a short time as compared with the case where the section is determined for each brightness value and the frequency is counted. Therefore, the time required for displaying the frequency distribution of the brightness values of an image can be shortened. The third embodiment is substantially the same as the first embodiment in other points. The frequency counted for each of the sections set at equal intervals on the linear scale may be converted into the frequency for each of the sections set at equal intervals on the logarithmic scale for storage of the provided frequency in an image file as graph data.

As described in the second and third embodiments, if the frequency for each of the sections set at equal intervals on the linear scale is counted, the DSC can display the histogram representing the frequency for each of the sections set at equal intervals on the linear scale in a short time and can display the histogram representing the frequency for each of the sections set at equal intervals on the logarithmic scale in a short time.

(Fourth embodiment)

FIG. 15 is a schematic drawing to display a histogram solely. A display section in a fourth embodiment displays a histogram solely as shown in the figure. The fourth embodiment is substantially the same as the first embodiment in other points. A DSC according to the fourth embodiment does not superpose the histogram on a scaled-down image or does not display the histogram and a scaled-down image side by side and thus can display the histogram largely and in an easy-to-see manner.

Brief Description of the Drawings

FIG. 1 is a schematic drawing to show the structure of an image file according to a first embodiment of the invention.

FIG. 2 is a block diagram of a digital camera according to the first embodiment of the invention.

FIG. 3 (A) is a rear view of the digital camera according to the first embodiment of the invention and FIG. 3 (B) is a top view of the digital camera.

FIG. 4 is a block diagram of a file output program according to the first embodiment of the invention.

FIG. 5 is a schematic drawing to show an example of a subject image according to the first embodiment of the invention.

FIG. 6 is a schematic drawing to show a count table according to the first embodiment of the invention.

FIG. 7 is a flowchart to show a processing flow of outputting a file according to the first embodiment of the invention.

FIG. 8 is a block diagram of a program for displaying image quality according to the first embodiment of the invention.

FIG. 9 is a schematic drawing of a GUI of the digital camera according to the first embodiment of the invention.

FIGS. 10 (A) , (B) , and (C) are schematic drawings to show graphs representing the frequencies of gray scale levels according to the first embodiment of the invention.

FIG. 11 is a schematic drawing of a screen of the digital camera according to the first embodiment of the invention.

FIG. 12 is a flowchart to show a processing flow of displaying an image and a graph according to the first embodiment of the invention.

FIG. 13 (A) is a schematic drawing to show a graph before adjustment of exposure condition and FIG. 13 (B) is a schematic drawing to show a graph after adjustment of exposure condition.

FIG. 14 is a schematic drawing to show a graph representing the frequencies of gray scale levels according to the first embodiment of the invention.

FIG. 15 is a schematic drawing to show a graph representing the frequencies of gray scale levels according to a fourth embodiment of the invention.

FIGS. 16 (A) and (B) are schematic drawings to show graphs in a related art.

FIG. 17 is a schematic drawing to show a count table according to the first embodiment of the invention.

FIG. 18 is a schematic drawing to show a graph representing the frequencies of gray scale levels according to embodiment of the invention.

Description of Reference Numerals

1 Digital still camera (digital camera, image quality display), 11 Optical system (image capturing means), 12 Image sensor (image capturing means), 13 Analog front end section (image capturing means), 14 Digital image processing section (image capturing means), 16 External storage section (output means, input means), 18 Display section (display means), 20 Control section (image capturing means, output means, input means, display means), 20a RAM (storage means)

**Claims**

1.   A digital camera **characterized by**:

image capturing means for converting a subject image into image data;

storage means for storing the subject image as the image data output from the image capturing means;

count means for counting frequency of gray scale levels of the subject image stored in the storage means for each predetermined section; and

output means for storing the subject image stored in the storage means and the frequency for each predetermined section counted by the count means in one file and outputting the file.

2. The digital camera as set forth in claim 1 **characterized in that** the count means counts the frequency for each of sections set at equal intervals on a logarithmic scale.

3. The digital camera as set forth in claim 1 **characterized in that** the count means counts the frequency for each of sections set at equal intervals on a linear scale.

4. The digital camera as set forth in claim 3 **characterized in that** the count means converts the frequency counted for each of the sections set at equal intervals on the linear scale into the frequency for each of the sections set at equal intervals on a logarithmic scale, and

the output means stores the converted frequency in the file.

5. A file output method **characterized by**:

an image capturing step of converting a subject image into image data;

a storage step of storing the subject image as the image data output in the image capturing step;

a count step of counting frequency of gray scale levels of the subject image stored in the storage step for each predetermined section; and

an output step of storing the subject image stored in the storage step and the frequency for each predetermined section counted in the count step in one file and outputting the file.

6. A file output program **characterized in that** the program causes a digital camera to function as:

image capturing means for converting a subject image into image data;

storage means for storing the subject image as the image data output from the image capturing means;

count means for counting frequency of gray scale levels of the subject image stored in the storage means for each predetermined section; and

output means for storing the subject image stored in the storage means and the frequency for each predetermined section counted by the count means in one file and outputting the file.

7. An image data structure **characterized in that** image data representing a subject image and frequency of gray scale levels of the subject image represented by the image data for each predetermined section are included in one file.

8. An image quality display **characterized by**:

input means for inputting a file; and

display means for displaying based on the file that is input by the input means and includes image data representing a subject image and frequency of gray scale levels of the subject image for each predetermined section in one file, a graph representing the subject image and the frequency of gray scale levels of the subject image.

9. The image quality display as set forth in claim 8 **characterized in that** the frequency counted for each of sections set at equal intervals on a linear scale is converted into the frequency for each of sections set at equal intervals on a logarithmic scale and the graph representing the frequency for each of the sections set at equal intervals on the logarithmic scale is displayed.

## FIG. 1

| |
|---|
| CREATION DATE |
| IMAGE SIZE |
| POINTER TO IMAGE DATA AREA |
| POINTER TO GRAPH DATA AREA |
| ⋮ |

5 5 HEADER AREA

| |
|---|
| IMAGE DATA |

5 6 IMAGE DATA AREA

| |
|---|
| ⋮ |
| 1 0 0、2 0 2、4 2 1、 29、3 8 2、8 3、‥ ‥‥‥‥ |

5 7 GRAPH DATA AREA

| |
|---|
| ⋮ |

## FIG. 2

EP 1 725 020 A1

# FIG. 3 (A)

# FIG. 3 (B)

## FIG. 4

51 — IMAGE CAPTURING SECTION

RAM — 20c

52 — COUNT SECTION

53 — OUTPUT SECTION

EXTERNAL STORAGE SECTION — 16

## FIG. 5

60

61

## FIG. 6

65

| SECTION REPRESENTATIVE VALUE (EXPOSURE VALUE) | SECTION RANGE (BRIGHTNESS VALUE) | SECTION WIDTH |
|---|---|---|
| 0.0 | 255 | |
| -0.2 | 222~254 | 33 |
| -0.4 | 193~221 | 29 |
| -0.6 | 168~192 | 25 |
| -0.8 | 146~167 | 22 |
| -1.0 | 128~145 | 18 |
| -1.2 | 111~127 | 18 |
| -1.4 | 97~110 | 14 |
| -1.6 | 84~96 | 13 |
| -1.8 | 73~83 | 11 |
| -2.0 | 64~72 | 9 |
| -2.2 | 55~63 | 9 |
| -2.4 | 48~54 | 7 |
| -2.6 | 42~47 | 6 |
| -2.8 | 36~41 | 6 |
| -3.0 | 32~35 | 4 |
| -3.2 | 27~31 | 5 |
| -3.4 | 24~26 | 3 |
| -3.6 | 21~23 | 3 |
| -3.8 | 18~20 | 3 |
| -4.0 | 15~17 | 3 |
| -4.2 | 14 | 1 |
| -4.4 | 12~13 | 2 |
| -4.6 | 10~11 | 2 |
| -4.8 | 9 | 1 |
| -5.0 | 8 | 1 |
| -5.2 | 7 | 1 |
| -5.4 | 6 | 1 |
| -5.6 | 5 | 1 |
| -5.8 | | |
| -6.0 | 4 | 1 |
| -6.2 | | |
| -6.4 | 3 | 1 |
| -6.6 | | |
| -6.8 | | |
| -7.0 | 2 | 1 |
| -7.2 | | |
| -7.4 | | |
| -7.6 | | |
| -7.8 | | |
| -8.0 | 1 | 1 |
| -8.2 | 0 | 1 |

## FIG. 7

START

↓

CONVERT SUBJECT IMAGE INTO IMAGE DATA — S105

↓

SCALE DOWN SUBJECT IMAGE (IMAGE) TO
GENERATE IMAGE DATA OF
SCALED-DOWN IMAGE — S110

↓

COUNT FREQUENCY OF GRAY SCALE LEVELS OF
SCALED-DOWN IMAGE FOR EACH OF SECTIONS
SET AT EQUAL INTERVALS ON LOGARITHMIC
SCALE, AND GENERATE GRAPH DATA — S115

↓

STORE IMAGE AND GRAPH DATA
IN ONE FILE AND OUTPUT FILE — S120

↓

END

## FIG. 8

EXTERNAL
STORAGE
SECTION — 16

↑
⋮

INPUT SECTION — 63

↓

DISPLAY SECTION — 64

⋮
↓

L C D — 18a

*FIG. 9*

FIG. 10 (A)

FIG. 10 (B)

FIG. 10 (C)

# FIG. 11

# FIG. 12

# FIG. 13 (A)

BEFORE ADJUSTMENT

# FIG. 13 (B)

AFTER ADJUSTMENT

## FIG. 14

## FIG. 15

# FIG. 16 (A)

BEFORE ADJUSTMENT

# FIG. 16 (B)

AFTER ADJUSTMENT

## FIG. 17

| SECTION REPRESENTATIVE VALUE (LOGARITHMIC SCALE) | SECTION RANGE (LINEAR SCALE) |
|---|---|
| 0.00 | 255 |
| -0.02 | 252-254 |
| -0.04 | 249-251 |
| -0.06 | 245-248 |
| -0.08 | 242-244 |
| -0.10 | 238-241 |
| -0.12 | 235-237 |
| -0.14 | 232-234 |
| · | · |
| · | · |
| · | · |
| -2.48 | 46 |
| · | · |
| · | · |

## FIG. 18

## INTERNATIONAL SEARCH REPORT

| | International application No. |
|---|---|
| | PCT/JP2005/003596 |

| A. CLASSIFICATION OF SUBJECT MATTER |
|---|
| Int.Cl$^7$  H04N5/225 |
| According to International Patent Classification (IPC) or to both national classification and IPC |

| B. FIELDS SEARCHED |
|---|
| Minimum documentation searched (classification system followed by classification symbols) |
| Int.Cl$^7$  H04N5/225-5/257 |

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-84440 A  (Olympus Optical Co., Ltd.),<br>22 March, 2002 (22.03.02),<br>Full text; all drawings<br>(Family: none) | 1,3,5-8<br>2,4,9 |
| Y | JP 2003-322902 A  (Olympus Optical Co., Ltd.),<br>14 November, 2003 (14.11.03),<br>Full text; all drawings<br>& US 2004/42791 A1 | 2,4,9 |

| ☐ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 27 May, 2005 (27.05.05) | 14 June, 2005 (14.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**EP 1 725 020 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001268400 A